# EUROPÄISCHE PATENTSCHRIFT

(11) **EP 4 037 959 B1**
(45) Veröffentlichungstag und Bekanntmachung des Hinweises auf die Patenterteilung: **26.03.2025**
(21) Anmeldenummer: 20803512.1
(22) Anmeldetag: 05.11.2020
(51) Int. Cl.: B62D 65/18

(54) **FÖRDEREINRICHTUNG ZUM TRANSPORT UND ZUR POSITIONIERUNG VON BAUTEILEN UND VERFAHREN ZUM TRANSPORT UND ZUM POSITIONIEREN VON BAUTEILEN MIT EINER FÖRDEREINRICHTUNG**
CONVEYOR DEVICE FOR TRANSPORTING AND POSITIONING COMPONENTS, AND METHOD FOR TRANSPORTING AND POSITIONING COMPONENTS USING A CONVEYOR DEVICE
DISPOSITIF CONVOYEUR POUR TRANSPORTER ET POSITIONNER DES COMPOSANTS, ET PROCÉDÉ POUR TRANSPORTER ET POSITIONNER DES COMPOSANTS EN UTILISANT UN DISPOSITIF CONVOYEUR

(30) Priorität: 08.11.2019 DE 102019130160
(43) Veröffentlichungstag der Anmeldung: 10.08.2022
(73) Patentinhaber: Ebz Systec GmbH, 88212 Ravensburg (DE)
(72) Erfinder: STADLER, Rainer, 88605 Rast (DE)
(74) Vertreter: Otten, Roth, Dobler & Partner mbB Patentanwälte
(86) Internationale Anmeldenummer: PCT/EP2020/081139
(87) Internationale Veröffentlichungsnummer: WO 2021/089702

(56) Entgegenhaltungen:
- DE-U1- 202007 005 034
- JP-B2- 5 804 403
- US-A1- 2012 110 838
- US-A1- 2012 285 797

## Beschreibung

Die Erfindung betrifft eine Fördereinrichtung zum Transport und zum Positionieren von Bauteilen und ein Verfahren zum Transport zum Positionieren von Bauteilen mit einer Fördereinrichtung gemäß dem Oberbegriff des Anspruchs 1 bzw. 12.

Aus der EP 2 560 861 B1 ist eine Fördereinrichtung zum Transport von Bauteilen bekannt, bei welcher ein Bauteilträgerwagen auf einer Förderbahn derart in Z-Richtung positioniert wird, dass ein mit dem Bauteilträgerwagen verbundenes Z-Auflagenpaket zwischen eine obere Positionierrolle und eine untere Gegenrolle einfährt und hierdurch eine in einem Schwenklager der Förderbahn durch eine Feder gefederte Führungsrolle dem Bauteilträgerwagen nach unten hin ausweicht.

Aus der US 2012/110838 A1 ist ein System zum Herstellen eines Seitenpaneels eines Fahrzeugs bekannt, wobei das System obere Laufschienen und untere Laufschienen aufweist, um einen Bewegungspfad eines Wagens bereitzustellen, wobei der Wagen einen Stützrahmen, eine Übertragungsrolle und eine an einer Bodenfläche des Stützrahmens vorgesehene Reibstange aufweist, wobei das Seitenpaneel an dem Wagen montiert sein kann und sich der Wagen selektiv entlang der oberen Laufschienen und der unteren Laufschienen bewegt, wobei mindestens eine Reibantriebseinheit und mindestens ein Reibrad umfasst sind, die entlang der oberen und unteren Laufschienen angeordnet sind, wobei der mindestens eine Reibantrieb das mindestens eine Reibrad selektiv dreht, um den Wagen durch selektives Eingreifen mindestens eines der Reibräder mit der Reibstange des Wagens zu bewegen, und eine externe Einheit umfasst ist, die einen Randabschnitt des Seitenpaneels während des Schlüsselschweißprozesses stützt.

Aus der JP 5 804403 B2 ist Fahrzeugmontagelinie bekannt, welche eine Vielzahl von Fördervorrichtungen umfasst, die eine Fahrzeugkarosserie entlang einer Linie fördern, indem sie eine Bodenfläche in einem Zustand bewegen, in dem sie die Fahrzeugkarosserie tragen, wobei die Fahrzeugmontagelinie eine Montagelinie eines Fahrzeugs ist, die eine an der Fahrzeugkarosserie zu montierende Komponente an jeder Fahrzeugkarosserie montiert, die von der Vielzahl von Fördervorrichtungen getragen wird, wobei die Montagelinie eine erste Montagelinie, eine zweite Montagelinie und einen Linienverbindungsabschnitt umfasst, der die erste Montagelinie und die zweite Montagelinie verbindet, wobei die erste Montagelinie und der Linienverbindungsabschnitt in einer Draufsicht im Wesentlichen eine U-Form haben, der Linienverbindungsabschnitt zu der zweiten Montagelinie in einem Zustand bewegt wird, in dem eine Vorwärts-Rückwärts-Richtung der Fahrzeugkarosserie, die durch die erste Montagelinie befördert wird, beibehalten wird, die Beförderungsvorrichtung einen Stützabschnitt umfasst, der an einem unteren Abschnitt jeder Fahrzeugkarosserie anliegt, um eine Vorwärts-Rückwärts-Richtung der Fahrzeugkarosserie in einer Haltung orthogonal zu der Beförderungsrichtung zu stützen und eine Basis, die den Stützabschnitt an einer oberen Fläche befestigt, wobei der Stützabschnitt einen stromaufwärts gelegenen Stützabschnitt und einen stromabwärts gelegenen Stützabschnitt aufweist, die auf einer stromaufwärts gelegenen Seite und einer stromabwärts gelegenen Seite der Basis entlang einer Förderrichtung der Basis vorgesehen sind, und eine Mitte einer Stütze, die an einer oberen Fläche der Basis befestigt ist.

Aus der DE 20 2007 005 034 U1 ist eine Fördereinrichtung zum Transport von Werkstückträgern von und zu ein oder mehreren Arbeitsstellen bekannt, wobei die Fördereinrichtung eine stationäre Förderbahn für die Werkstückträger und einen Förderantrieb aufweist, hierbei weist die Fördereinrichtung an der Arbeitsstelle eine Positioniereinrichtung zur mehrachsigen Positionierung des Werkstückträgers auf.

Es ist Aufgabe der Erfindung eine Fördereinrichtung vorzuschlagen, welche konstruktiv vereinfacht ist. Weiterhin ist es Aufgabe der Erfindung ein Verfahren zum Transport von Bauteilen mit einer Fördereinrichtung vorzuschlagen, welches eine genaue Ausrichtung des Bauteils erlaubt.

Diese Aufgabe wird ausgehend von den Merkmalen des Oberbegriffs des Anspruchs 1 bzw. 12 durch die kennzeichnenden Merkmale des Anspruchs 1 bzw. 12 gelöst. In den jeweiligen Unteransprüchen sind vorteilhafte und zweckmäßige Weiterbildungen angegeben.

Die Fördereinrichtung zum Transport und zum Positionieren von Bauteilen umfasst eine Förderbahn, wobei die Förderbahn eine Vielzahl von Gleisabschnitten umfasst, wobei jeder Gleisabschnitt wenigstens eine Schiene und wenigstens eine Stützeinrichtung umfasst, wobei die Fördereinrichtung wenigstens einen Bauteilträgerschlitten umfasst, wobei der Bauteilträgerschlitten eine Kontakteinrichtung umfasst, wobei wenigstens einer der Gleisabschnitte als Geogleisabschnitt ausgebildet ist, wobei der Geogleisabschnitt eine Kompensationseinrichtung umfasst, wobei die Kompensationseinrichtung zwischen der Stützeinrichtung und der wenigstens einen Schiene des Geogleisabschnitts angeordnet ist. Durch eine derartige Ausstattung des Gleisabschnitts mit einer Kompensationseinrichtung und eine derartige Anordnung dieser Kompensationseinrichtung, kann die wenigstens eine Schiene konstruktiv einfach ausgeführt werden, da die Schiene als ganzes Bauteil bewegt werden kann und es nicht erforderlich ist, eine Vielzahl einzelner Bauteile zu bewegen. Hierdurch können die Kosten für jeden Geogleisabschnitt der Fördereinrichtung erheblich gesenkt werden können.

Erfindungsgemäß ist es bei der Fördereinrichtung vorgesehen, durch die Kompensationseinrichtung eine Gewichtskraft der Schiene, eine Gewichtskraft eines der Bauteilträgerschlitten und eine Gewichtskraft des Bauteils zu kompensieren und die Schiene bei einer entsprechenden Belastung auf einem Fahrniveau zu halten, wobei der Geogleisabschnitt eine Ablenkeinrichtung umfasst und wobei die Ablenkeinrichtung in einer Parkstellung des Bauteilträgerschlittens derart mit der Kontakteinrichtung des Bauteilträgerschlittens zusammenwirkt, dass die Schiene des Geogleisabschnitts, der Bauteilträgerschlitten und das Bauteil auf ein von dem Fahrniveau abweichendes Parkniveau gelenkt sind. Hierdurch lässt sich der Bauteilträgerschlitten mit dem zu bearbeitenden Bauteil einfach in ein Parkniveau bringen, auf dem dann eine automatische Bearbeitung des Bauteils erfolgen kann. Es kann weiterhin vorgesehen sein, die Ablenkeinrichtung des Geogleisabschnitts entweder zur Z-Positionierung als Anhebeeinrichtung oder zur Z-Positionierung als Absenkeinrichtung auszubilden, wobei bei einer Ausbildung als Anhebeeinrichtung das obere Parkniveau dadurch erreicht wird, dass die Ablenkeinrichtung in der Parkstellung des Bauteilträgerschlittens einen Teil der Gewichtskraft aufnimmt, so dass die Schiene, der Bauteilträgerschlitten und das Bauteil mit Unterstützung der Kompensationseinrichtung angehoben ist und die Schiene auf ein über dem Fahrniveau liegendes oberes Parkniveau angehoben ist und wobei bei einer Ausbildung als Absenkeinrichtung das untere Parkniveau dadurch erreicht wird, dass die Ablenkeinrichtung in der Parkstellung des Bauteilträgerschlittens den Bauteilträgerschlitten in Richtung der Gewichtskraft mit einer Zusatzkraft belastet, so dass die Schiene, der Bauteilträgerschlitten und das Bauteil gegen eine Kompensationskraft der Kompensationseinrichtung abgesenkt sind und die Schiene auf ein unter dem Fahrniveau liegendes unteres Parkniveau absenkt ist. Dadurch dass die wenigstens eine Schiene die Niveauveränderung mitmacht, ist der Bauteilträgerschlitten immer in gleicher Weise durch die wenigstens eine Schiene getragen und dadurch stabilisiert, so dass der Bauteilträgerschlitten leichter und damit kostengünstiger gebaut werden kann.

Weiterhin kann es vorgesehen sein, dass die Stützeinrichtung wenigstens zwei Stützmittel umfasst und dass die Kompensationseinrichtung wenigstens zwei Kompensationsmittel umfasst, wobei jedem der Stützmittel eines der Kompensationsmittel zugeordnet ist. Bei einer derartigen Ausführung der Stützeinrichtung und der Kompensationseinrichtung ist eine Schiene optimal getragen.

Es kann weiterhin auch vorgesehen sein, die wenigstens eine Schiene des Geogleisabschnitts mit Rollen oder wenigstens einem Riemen auszustatten, auf welchen bzw. auf welchem der Bauteilträgerschlitten bewegt wird, wobei wenigstens eine der Rollen als motorisch angetriebene Antriebsrolle ausgebildet ist oder wobei der eine Riemen oder wenigstens einer der Riemen als motorisch angetriebener Riemen ausgebildet ist. Durch eine derartige Bauart der Schiene lässt sich der Bauteilträgerschlitten trotz seines unter Umständen hohen Gewichts mit geringem Kraftaufwand über die Schiene bewegen. Selbstverständlich kann es auch vorgesehen sein, die wenigstens eine Schiene des Geogleisabschnitts mit wenigstens einer Rolle und wenigstens einem Riemen auszustatten, wobei dann wenigstens eine Rolle und/oder wenigstens ein Riemen angetrieben ist bzw. sind.

Es kann auch vorgesehen sein, dass der Bauteilträgerschlitten mit einer Bodenfläche auf den Rollen oder dem wenigstens einen Riemen des Geogleisabschnitts aufliegt. Hierdurch ist ein großflächiger, den Bauteilträgerschlitten stabilisierender Kontakt zu der wenigsten einen mit Rollen ausgestatteten Schiene gewährleistet.

Es kann auch vorgesehen sein, die Ablenkkeile der Ablenkeinrichtung des Geogleisabschnitts als Z-Positioniermittel auszubilden, welche mit einem Untergrund und/oder mit der Stützeinrichtung verbunden sind. Hierdurch kann mit diesen Z-Positioniermitteln Einfluss auf ein Niveau des Bauteilträgerschlittens genommen werden.

Es kann bei der Fördereinrichtung weiterhin vorgesehen sein, jeden Gleisabschnitt mit einer Seitenführungseinrichtung auszustatten, wobei die Seitenführungseinrichtung rechte Seitenführungsmittel und linke Seitenführungsmittel umfasst, wobei die Seitenführungsmittel mit der wenigstes einen Schiene verbunden sind, wobei der Bauteilträgerschlitten zwischen den Seitenführungsmitteln geführt ist, wobei jeder Gleisabschnitt mit einer Kippsichereinrichtung ausgestattet ist, wobei die Kippsichereinrichtung in z'-Richtung wirkende rechte Druckführungsmittel und linke Druckführungsmittel umfasst, wobei die Druckführungsmittel mit der wenigstens einen Schiene verbunden sind, wobei der Bauteilträgerschlitten von den Druckführungsmitteln gegen die wenigstens eine Schiene gedrückt ist. Hierdurch ist eine zuverlässige Führung der Bauteilträgerschlitten auf allen Gleisabschnitten sichergestellt. Im Hinblick auf die Geogleisabschnitte ist eine zuverlässige Führung auch bei einem Übergang von einem Fahrniveau auf ein Parkniveau sicher gestellt, da die Seitenführungseinrichtung und die Kippsichereinrichtung an der Schiene angeordnet sind und somit zusammen mit dem Bauteilträgerschlitten bewegt werden, wenn dieser von dem Fahrniveau auf das jeweils vorgesehene Parkniveau wechselt.

Weiterhin kann es vorgesehen sein, den Geogleisabschnitt mit wenigstens einer Anhalteeinrichtung auszustatten, wobei die Anhalteeinrichtung mit der wenigstes einen Schiene verbunden ist, wobei die Anhalteeinrichtung den Bauteilträgerschlitten in einer X-Position stoppt, wenn dieser in z-Richtung das Parkniveau erreicht hat. Hierdurch ist eine auch in x-Richtung genaue Ausrichtung des Bauteilträgerschlittens erreicht.

Es ist auch vorgesehen, jedem Z-Positioniermittel ein Kompensationsmittel der Kompensationseinrichtung derart zuzuordnen, dass das Kompensationsmittel zentrisch unter dem Z-Positioniermittel oder mit einer Abweichung in x-Richtung und/oder x'-Richtung und/oder y-Richtung und/oder y-Richtung von bis zu 50 cm und vorzugsweise nur bis zu 20 cm angeordnet ist. Hierdurch wird ein weitgehend senkrechter Kraftfluss erreicht und hierdurch ist somit eine Belastung der Bauteile optimiert.

Es kann vorgesehen sein, den Bauteilträgerschlitten mit einem T-Träger auszustatten, wobei der T-Träger auf den Rollen der wenigstens einen Schiene eines der Gleisabschnitte aufliegt, wobei die Druckführungsmittel der Kippsichereinrichtung rechts und links von einem Mittelsteg des T-Trägers auf einer Oberseite eines Querstegs des T-Trägers laufen und den T-Träger gegen die Rollen der Schiene in z'-Richtung auf die Schiene drücken und wobei die Seitenführungsmittel der Seitenführungseinrichtung rechts und links von dem Mittelsteg des T-Trägers an Seitenflächen des Quersteges laufen bzw. in y-Richtung und y'-Richtung an den Seitenflächen des T-Trägers anliegen und diesen in x-Richtung bzw. Transportrichtung auf Spur halten. Hierdurch ist eine einfache und zuverlässige Verbindung zwischen der Schiene und dem Bauteilträgerschlitten geschaffen.

Weiterhin kann es vorgesehen sein, wenigstens einen der Gleisabschnitte der Förderbahn und insbesondere den Geogleisabschnitt mit einer Gewichtserfassungseinrichtung auszustatten, wobei die Gewichtserfassungseinrichtung ein Gesamtgewicht von Bauteil und Bauteilträgerschlitten oder von Bauteil, Bauteilträgerschlitten und Schiene erfasst und/oder berechnet. Hierdurch ist es möglich, die Kompensationseinrichtung gezielt auf eine Belastung einzustellen, welche diese durch das Gewicht des Bauteils, das Gewicht des Bauteilträgerschlittens und das Gewicht der Schiene erfährt.

Es kann auch vorgesehen sein, dass der Geogleisabschnitt eine Steuereinrichtung umfasst, wobei die Steuereinrichtung eine Hubkraft der Kompensationseinrichtung derart einstellt, dass die Schiene des Geogleisabschnitts, der Bauteilträgerschlitten und das Bauteil derart angehoben sind, dass die Schiene auf dem Fahrniveau liegt. Hierdurch ist ein Geogleisabschnitt, ohne dass ein Umbau erforderlich ist, für beliebige Kombinationen aus unterschiedlich schweren Bauteilträgerschlitten, unterschiedlich schweren Bauteilen und unterschiedlich schweren Schienen verwendbar.

Schließlich kann es vorgesehen sein, den Geogleisabschnitt mit einer Positionserfassungseinrichtung auszustatten, wobei die Positionserfassungseinrichtung eine x-Position des Bauteilträgerschlittens auf dem Geogleisabschnitt erfasst und wobei eine Steuereinheit eine Hubkraft der Kompensationseinrichtung in Abhängigkeit von der x-Position des Geogleisabschnitts jeweils derart einstellt, dass ein Einfahren in die Ablenkeinrichtung erleichtert ist und/oder dass ein Ausfahren aus der Ablenkeinrichtung erleichtert ist und/oder dass der Bauteilträgerschlitten durch eine von der Kompensationseinrichtung aufgebrachte Hubkraft in der Parkstellung fixiert ist. Hierdurch kann die mechanische Belastung des Geogleisabschnitts und des Bauteilträgerschlittens reduziert werden. Weiterhin kann der Bauteilträgerschlitten hierdurch in der Parkstellung zusätzlich oder unter Vermeidung weiterer Fixierungsmittel gesichert werden.

Bei dem erfindungsgemäßen Verfahren zum Transport und zum Positionieren von Bauteilen mit einer Fördereinrichtung, insbesondere einer Fördereinrichtung entsprechend wenigstens einem der Ansprüche 1 bis 11, ist es vorgesehen, dass die Fördereinrichtung eine Förderbahn umfasst, dass die Förderbahn eine Vielzahl von Gleisabschnitten und wenigstens einen Bauteilträgerschlitten umfasst, dass jeder Gleisabschnitt wenigstens eine Schiene, eine Stützeinrichtung umfasst, dass wenigstens einer der Gleisabschnitte als Geogleisabschnitt ausgebildet ist und zusätzlich eine Kompensationseinrichtung umfasst, dass die Kompensationseinrichtung zwischen der Stützeinrichtung und der wenigstens einen Schiene des Geogleisabschnitts angeordnet ist, dass in dem Geogleisabschnitt die Gewichtskraft der wenigstens einen Schiene, die Gewichtskraft des Bauteilträgerschlittens und die Gewichtskraft des Bauteils durch die Kompensationseinrichtung kompensiert werden, wenn der Bauteilträgerschlitten auf einem Fahrniveau bewegt wird und dass der Bauteilträgerschlitten in dem Geogleisabschnitt von dem Fahrniveau dadurch auf ein Parkniveau gelenkt wird, dass von einer Ablenkeinrichtung des Geogleisabschnitts derart mit einer Ablenkkraft auf eine Kontakteinrichtung des Bauteilträgerschlittens eingewirkt wird, dass der Bauteilträgerschlitten von dem Fahrniveau weg auf das Parkniveau bewegt wird. Hierdurch sind eine genaue Positionierung des Bauteilträgerschlittens mit dem Bauteil und damit auch eine hochgenaue Bearbeitung des Bauteils möglich.

Weiterhin kann es vorgesehen sein, die Ablenkkraft in Richtung der Gewichtskraft zu richten und den Bauteilträgerschlitten von der Ablenkkraft gegen die Kompensationskraft der Kompensationseinrichtung auf ein unter dem Fahrniveau liegendes unteres Parkniveau drücken zu lassen oder die Ablenkkraft der Gewichtskraft entgegen zu richten und den Bauteilträgerschlitten von der Ablenkkraft mit Unterstützung durch die Kompensationskraft der Kompensationseinrichtung auf ein über dem Fahrniveau liegendes oberes Parkniveau heben zu lassen. Hierdurch kann ein Wechsel zwischen dem Fahrniveau und dem Parkniveau mit vergleichsweise geringem Kraftaufwand erfolgen.

Es kann auch vorgesehen sein, zum Erreichen der unteren Parkniveaus die wenigstens eine Schiene des Geogleisabschnitts an die Stützeinrichtung anzunähern oder zum Erreichen des oberen Parkniveaus die wenigstens eine Schiene des Geogleisabschnitts von der Stützeinrichtung weg zu bewegen. Hierdurch wird der Bauteilträgerschlitten auch dann durch die Schiene gestützt und stabilisiert, wenn sich dieser in das Parkniveau bewegt oder in dem Parkniveau angehalten ist oder sich aus dem Parkniveau heraus wieder in das Fahrniveau bewegt.

Weiterhin kann es vorgesehen sein, eine maximale Hubkraft der Kompensationseinrichtung derart einzustellen, dass von der Kompensationseinrichtung eine Hubkraft erzeugt wird, welche wenigstens gleich der Summe der Gewichtskraft des Werkstücks und der Gewichtskraft des Bauteilträgerschlittens und der Gewichtskraft der Schiene ist. Hierdurch kann die Kraft, welche von der Ablenkeinrichtung erzeugt werden muss, um den Bauteilträgerschlitten von dem Fahrniveau in das obere Parkniveau anzuheben oder in das untere Parkniveau abzusenken gering gehalten werden. Gleichzeitig ist sichergestellt, dass der Bauteilträgerschlitten bzw. die Schiene sich immer dann, wenn der Bauteilträgerschlitten von der Ablenkeinrichtung unbeeinflusst ist, auf dem Fahrniveau FN befinden.

Schließlich kann es vorgesehen sein, mittels einer Gewichtserfassungseinrichtung eine Masse des Werkstücks und eine Masse des Bauteilträgerschlittens und eine Masse der wenigstens einen Schiene zu erfassen und/oder zu berechnen, wobei eine ermittelte Gesamtmasse an eine Steuereinrichtung weitergeleitet wird, wobei von der Steuereinheit eine wenigstens die Gesamtmasse kompensierende Hubkraft der Kompensationseinrichtung eingestellt wird. Hierdurch kann die Kompensationseinrichtung jedes Geogleisabschnitts automatisch auf eine Kombination aus Bauteilträgerschlitten und Bauteil eingestellt werden, so dass die Kraft, welche von der Ablenkeinrichtung erzeugt werden muss, unabhängig von der Kombination aus Bauteilträgerschlitten und Bauteil gering bleibt.

Weitere Einzelheiten der Erfindung werden in der Zeichnung anhand von schematisch dargestellten Ausführungsbeispielen beschrieben.

Hierbei zeigt:
- Figuren 1a bis 1d:: eine erste Ausführungsvariante einer erfindungsgemäßen Fördereinrichtung zum Transport von Bauteilen in drei schematischen Seitenansichten und einer schematischen Schnittansicht und
- Figuren 2a bis 2c:: eine zweite Ausführungsvariante einer erfindungsgemäßen Fördereinrichtung zum Transport von Bauteilen in drei schematischen Seitenansichten.

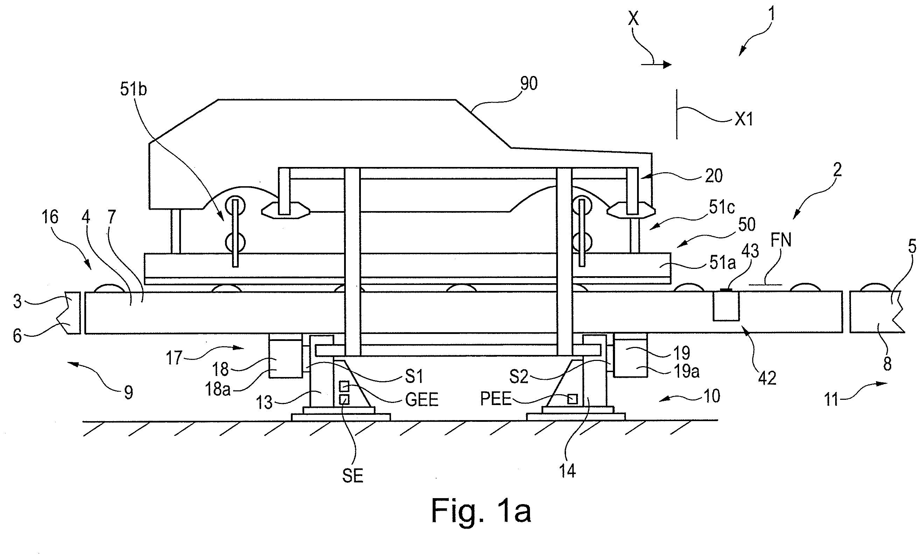

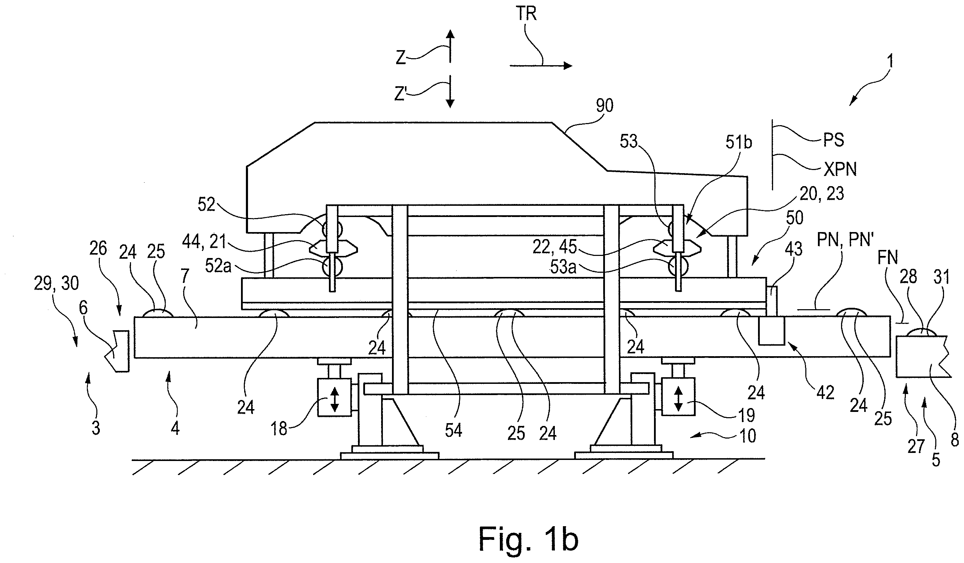

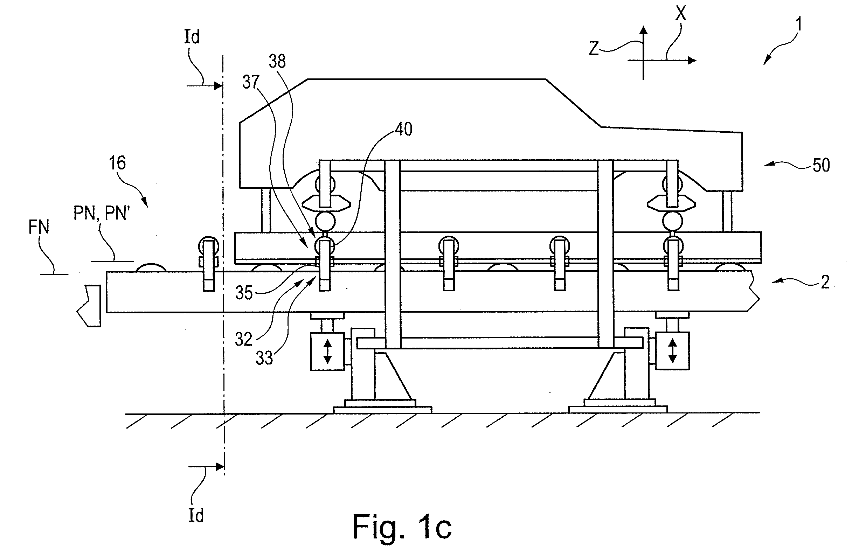

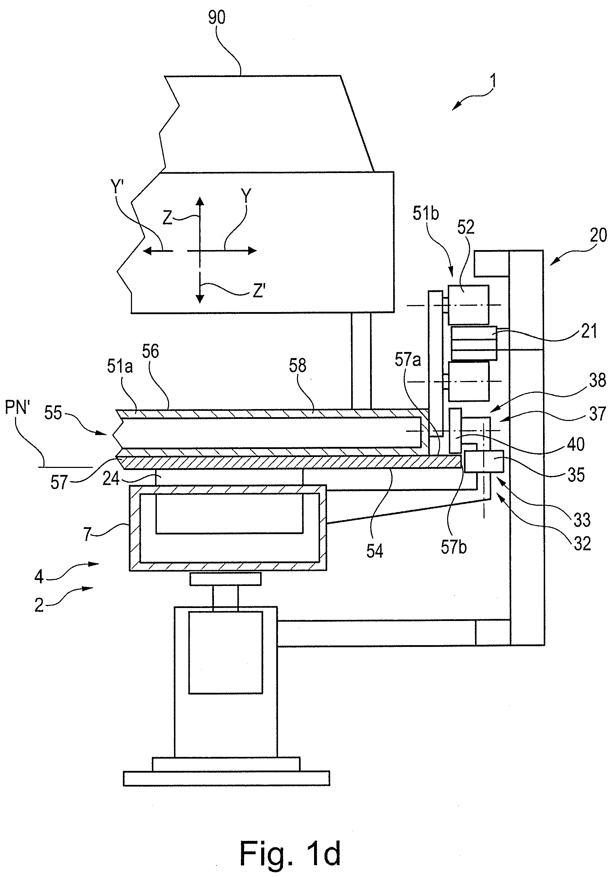

In den Figuren 1a bis 1d ist eine erste Ausführungsvariante einer erfindungsgemäßen Fördereinrichtung 1 zum Transport eines Bauteils 90 in vier schematischen Ansichten gezeigt. Hierbei zeigen die Figuren 1a und 1b einen Ablauf anhand schematische Seitenansichten. Die Figur 1c zeigt die Figur 1b in einem höheren Detaillierungsgrad. Die Figur 1d zeigt einen Schnitt durch die Darstellung der Figur 1c entsprechend der Schnittlinie Id-Id. Die Fördereinrichtung 1 umfasst eine Förderbahn 2. Die Förderbahn 2 umfasst eine Vielzahl von Gleisabschnitten 3, 4, 5. Jeder Gleisabschnitt 3, 4, 5 umfasst eine Schiene 6, 7, 8 und eine Stützeinrichtung 9, 10, 11, wobei die Stützeinrichtungen 9 und 11 in den Figuren 1a und 1b nicht sichtbar sind. Die Stützeinrichtung 9, 10, 11 umfasst jeweils zwei Stützmittel 13, 14, wobei von den Stützeinrichtungen 9, 11 keine Stützmittel sichtbar sind. Die Fördereinrichtung 1 umfasst einen Bauteilträgerschlitten 50. Der Bauteilträgerschlitten 50 umfasst einen Grundkörper 51a, eine Kontakteinrichtung 51b und eine Halteeinrichtung 51c. Die Kontakteinrichtung 51b ist fest mit dem Grundkörper 51a verbunden ist. Mittels der Halteeinrichtung 51c ist das Bauteil 90 an dem Bauteilträgerschlitten 50 befestigt. Der mittlere Gleisabschnitt 4 ist als Geogleisabschnitt 16 ausgebildet. Der Geogleisabschnitt 16 umfasst eine Kompensationseinrichtung 17, wobei die Kompensationseinrichtung 17 zwischen der Stützeinrichtung 10 und der Schiene 7 des Geogleisabschnitts 16 angeordnet ist. Hierbei umfasst die Kompensationseinrichtung 17 Kompensationsmittel 18, 19, welche jeweils zwischen einem der Stützmittel 13, 14 und der Schiene 7 angeordnet sind. Die Kompensationsmittel 18, 19 sind jeweils als hydraulische Hubzylinder 18a, 19a ausgebildet. Alternativ können auch pneumatisch oder elektrische betriebene Hubzylinder verwendet werden.

Durch die Kompensationseinrichtung 17 wird eine Gewichtskraft der Schiene 7, eine Gewichtskraft des Bauteilträgerschlittens 50 und eine Gewichtskraft des Bauteils 90 derart kompensiert, dass die Schiene 7 bei einer Belastung durch den Bauteilträgerschlitten 50 und das darauf angeordnete Bauteil 90 auf einem Fahrniveau FN gehalten ist.

Der Geogleisabschnitt 16 umfasst eine Ablenkeinrichtung 20. Die Ablenkeinrichtung 20 wirkt in einer in der Figur 1b gezeigten Parkstellung PS des Bauteilträgerschlittens 50 derart mit der Kontakteinrichtung 51b des Bauteilträgerschlittens 50 zusammen, dass die Schiene 7 des Geogleisabschnitts 16, der Bauteilträgerschlitten 50 und das Bauteil 90 auf ein von dem Fahrniveau FN abweichendes Parkniveau PN gelenkt sind. Hierbei umfasst die Ablenkeinrichtung 20 Ablenkkeile 21, 22 und hierbei umfasst die Kontakteinrichtung 51b des Bauteilträgerschlittens 50 Kontaktrollen 52, 53. Die Ablenkkeile 21, 22 sind an der Stützeinrichtung 10 befestigt und somit ortsfest.

Wenn der Bauteilträgerschlitten 50 aus einer in der Figur 1a gezeigten Stellung 50-I in eine in der Figur 1b gezeigte Stellung 50-II fährt, läuft der Bauteilträgerschlitten 50 mit seinen Kontaktrollen 52, 53 auf die Ablenkkeile 21, 22 auf und wird hierbei auf das Parkniveau PN gehoben, welches auch als oberes Parkniveau PN' benannt ist. Zusammen mit dem Bauteilträgerschlitten 50 und dem Bauteil 90 wird auch die Schiene 7 angehoben, da diese mit dem Bauteilträgerschlitten 50 gekoppelt ist und da diese bei einer Entlastung von dem Gewicht des Bauteilträgerschlittens 50 und von dem Gewicht des Bauteils 90 von der Kompensationseinrichtung 17 nach oben in Pfeilrichtung z gedrückt wird.

Die Ablenkeinrichtung 20 des Geogleisabschnitts 16 ist zur Positionierung des Bauteils 90 in z-Richtung als Anhebeeinrichtung 23 ausgebildet. Bei einer Ausbildung als Anhebeeinrichtung 23 wird das obere Parkniveau PN' dadurch erreicht, dass die Ablenkeinrichtung 20 in der Parkstellung PS des Bauteilträgerschlittens 50 einen Teil der erwähnten Gewichtskräfte aufnimmt, so dass die Schiene 7, der Bauteilträgerschlitten 50 und das Bauteil 90 mit Unterstützung der Kompensationseinrichtung 17 angehoben sind und die Schiene auf das über dem Fahrniveau FN liegende obere Parkniveau PN' angehoben ist. Sofern in dieser Parkstellung PS eine Kraft, mit welcher die Kompensationseinrichtung 17 das Gewicht des Bauteils 90, des Bauteilträgerschlittens 50 und der Schiene 7 trägt, reduziert wird, werden der Bauteilträgerschlitten 50 und das Bauteil 90 stärker fixiert, da der Bauteilträgerschlitten 50 dann mit seinen Kontaktrollen 52, 53 mit einer erhöhten Kraft auf den Ablenkkeilen 21, 22 aufliegt. Optional ist der Bauteilträgerschlitten 50 zusätzlich mit unteren Gegenkontaktrollen 52a, 53a ausgestattet. Diese liegen in der Parkstellung PS von unten an den Ablenkkeilen 21, 22 an. Somit ist es auch möglich, dass der Bauteilträgerschlitten 50 durch einen Erhöhung der Kraft, mit welcher die Kompensationseinrichtung 17 nach oben wirkt, von unten gegen die Ablenkkeile 21, 22 der Ablenkeinrichtung 20 gedrückt und damit eingespannt wird.

Die Schiene 7 des Geogleisabschnitts 16 umfasst Rollen 24, auf welchen der Bauteilträgerschlitten 50 gleitet. Hierbei sind drei der Rollen 24 als motorisch angetriebene Antriebsrolle 25 ausgebildet. Auch die Schienen 6, 8 der Gleisabschnitte 3, 5, welche als Transportabschnitte 26, 27 ausgebildet sind, umfassen jeweils Rollen 28, 29, welche ebenfalls teilweise als Antriebsrollen 30, 31 ausgebildet sind.

Der Bauteilträgerschlitten 50 liegt beim Überfahren der Gleisabschnitte 3, 4, 5 mit einer Bodenfläche 54 auf den erwähnten Rollen 24, 28, 29 des Transportabschnitts 26 bzw. des Geogleisabschnitts 16 bzw. des Transportabschnitts 27 auf und wird bei sich drehenden Antriebsrollen 25, 30, 31 in ein Transportrichtung TR bewegt.

Die Ablenkkeile 21, 22 der Ablenkeinrichtung 20 des Geogleisabschnitts 16 bilden Z-Positioniermittel 44, 45, welche mit der Stützeinrichtung 10 verbunden und somit ortsfest sind. Alternativ können diese auch direkt mit einem Untergrund U verbunden sein.

In der Figur 1c ist die Darstellung der Figur 1b in einem höheren Detailierungsgrad gezeigt. Die Figur 1d zeigt zu der Figur 1c in schematischer Ansicht einen Schnitt entsprechend der Schnittlinie Id-Id durch den Geogleisabschnitt 16 der Fördereinrichtung 1. Um den Bauteilträgerschlitten 50 sicher auf der Förderbahn 2 zu führen, umfasst der Geogleisabschnitt 16 mehrere Seitenführungseinrichtungen 32, wobei nur eine der Seitenführungseinrichtungen 32 exemplarisch bezeichnet ist. Die Seitenführungseinrichtung 32 umfasst rechte Seitenführungsmittel 33 und linke, nicht dargestellte Seitenführungsmittel, wobei die linken Seitenführungsmittel spiegelbildlich in Bezug auf eine xz-Ebene zu den rechten Seitenführungsmitteln 33 ausgebildet sind. Die Seitenführungsmittel 33 umfassen jeweils eine Seitenführungsrollen 35 und sind mit der Schiene 7 des Geogleisabschnitts 16 verbunden. Der Bauteilträgerschlitten 50 ist zwischen den Seitenführungsmitteln 33 so geführt, dass dieser von der Transportrichtung TR (siehe Figur 1c) nicht in y-Richtung oder in y'-Richtung abweicht.

Weiterhin umfasst der Geogleisabschnitt 16 mehrere Kippsichereinrichtungen 37, wobei nur eine der Kippsichereinrichtungen bezeichnet ist und wobei die Kippsichereinrichtung 37 in z'-Richtung wirkende rechte Druckführungsmittel 38 und spiegelbildlich in Bezug auf die xz-Ebene angeordnete linke, nicht dargestellte Druckführungsmittel umfasst. Die Druckführungsmittel 38 sind mit der Schiene 7 verbunden und umfassen jeweils eine Druckrolle 40. Die Druckführungsmittel 38 drücken den Bauteilträgerschlitten 50 von oben gegen die Schiene 7, wobei der Bauteilträgerschlitten 50 hierbei mit den Rollen 24 der Schiene 7 in Kontakt steht. Auch die vor und nach dem Geogleisabschnitt 16 angeordneten Transportabschnitte 26 und 27 umfassen jeweils entsprechende Seitenführungseinrichtungen und entsprechende Kippsichereinrichtungen, um den Bauteilträgerschlitten sicher in der Transportrichtung TR zu führen. Die Zahl der Seitenführungseinrichtungen und der Kippsichereinrichtungen ist jeweils an eine Länge des jeweiligen Gleisabschnitts und an eine Länge des Bauteilträgerschlittens so angepasst ist, dass der Bauteilträgerschlitten sicher geführt ist.

Bei dem Geogleisabschnitt 16 ist es wichtig, dass die Seitenführungseinrichtungen 32 und die Kippsichereinrichtungen 37 mit der Schiene 7 verbunden sind, damit sich die Seitenführungseinrichtungen 32 und die Kippsichereinrichtungen 37 zusammen mit der Schiene 7 in z-Richtung bzw. in z'-Richtung mit dem Bauteilträgerschlitte 50 mitbewegen können, wenn dieser auf das obere Parkniveau PN' angehoben wird und wenn dieser von dem oberen Parkniveau PN' wieder auf das Fahrniveau FN abgesenkt wird.

Der Geogleisabschnitt 16 umfasst - wie dies in den Figuren 1a und 1b sichtbar ist - auch eine Anhalteeinrichtung 42, welche mit der Schiene 7 verbunden ist. Die Anhalteeinrichtung 42 stoppt den Bauteilträgerschlitten 50 in einer x-Position XPN, wenn dieser in z-Richtung das obere Parkniveau PN' erreicht hat. Hierzu umfasst die Anhalteeinrichtung 42 einen vertikal ein- und ausfahrbaren Anschlag 43.

Dem Z-Positioniermittel 44 ist das Kompensationsmittel 18 derart zugeordnet, dass das Kompensationsmittel 18 senkrecht unter dem Z-Positioniermittel 44 angeordnet ist. Weiterhin ist das Kompensationsmitte 18 mittig zwischen der zweiten und dritten Rolle 24 der Schiene 7 angeordnet.

Dem Z-Positioniermittel 45 ist das Kompensationsmittel 19 derart zugeordnet, dass das Kompensationsmittel 19 senkrecht unter dem Z-Positioniermittel 45 angeordnet ist. Weiterhin ist das Kompensationsmittel 19 mittig zwischen der fünften und sechsten Rolle 24 der Schiene 7 angeordnet.

Aus der Figur 1d ist weiter ersichtlich, dass der Grundkörper 51a des Bauteilträgerschlittens 50 einen T-Träger 55 umfasst und mit dem T-Träger 55 auf den Rollen 24 der Schiene 7 des Gleisabschnitts 4 aufliegt. Hierbei ist die Bodenfläche 54 des Bauteilträgerschlittens 50 durch den T-Träger 55 gebildet. Die Druckführungsmittel 38 der Kippsichereinrichtung 37 laufen rechts und links von einem Mittelsteg 56 des T-Trägers 55 auf einer Oberseite 57a eines Querstegs 57 des T-Trägers 55. Hierbei ist der Mittelsteg 56 durch eine Hohlprofil 58 gebildet. Die Druckführungsmittel 38 der Kippsichereinrichtung 37 drücken den T-Träger 55 somit gegen die Rollen 24 der Schiene 7 in z'-Richtung. Die Seitenführungsmittel 33 der Seitenführungseinrichtung 32 laufen rechts und links von dem Mittelsteg 56 des T-Trägers 55 an Seitenflächen 57b des Quersteges 57 und halten den T-Träger 55 durch seitlichen Druck in y'-Richtung und seitlichen Druck in y-Richtung in x-Richtung bzw. Transportrichtung TR auf Spur. Weiterhin ist die Kontakteinrichtung 51b des Bauteilträgerschlittens 50 sichtbar, welche mit ihrer Kontaktrolle 52 auf dem Ablenkkeil 21 der Ablenkeinrichtung 20 aufliegt und hierdurch das Bauteil 90, den Bauteilträgerschlitten 50 und die Schiene 7 auf dem oberen Parkniveau PN' hält.

In der Figur 1a ist gezeigt, dass der Geogleisabschnitt 16 eine Gewichtserfassungseinrichtung GEE umfasst, welche einen ersten Sensor S1 und einen zweiten Sensor S2 umfasst. Mit diesen Sensoren S1, S2 erfasst die Gewichtserfassungseinrichtung GEE ein Gesamtgewicht von Bauteil 90, Bauteilträgerschlitten 50 und Schiene 7. Der Geogleisabschnitt 16 umfasst weiterhin eine Steuereinrichtung SE, wobei die Steuereinrichtung SE eine Hubkraft der Kompensationseinrichtung 17 derart einstellt, dass die Schiene 7 des Geogleisabschnitts 16, der Bauteilträgerschlitten 50 und das Bauteil 90 derart angehoben sind, dass die Schiene 7 auf dem Fahrniveau FN liegt. Ergänzend ist es noch vorgesehen, dass der Geogleisabschnitt 16 eine Positionserfassungseinrichtung PEE umfasst, wobei die Positionserfassungseinrichtung PEE eine x-Position des Bauteilträgerschlittens 50 auf dem Geogleisabschnitt 16 erfasst. Der Bauteilträgerschlitten 50 ist in der Figur 1b in der x-Position XPN gezeigt. In der Figur 1a ist der Bauteilträgerschlitten 50 in einer x-position X1 gezeigt. Die Steuereinheit SE stellt eine Hubkraft der Kompensationseinrichtung 17 in Abhängigkeit von der x-Position des Bauteilträgerschlittens 50 auf dem Geogleisabschnitt 16 jeweils derart ein, dass ein Einfahren in die Ablenkeinrichtung 20 erleichtert ist, dass ein Ausfahren aus der Ablenkeinrichtung 20 erleichtert ist und dass der Bauteilträgerschlitten 50 durch eine von der Kompensationseinrichtung 17 aufgebrachte Hubkraft in seiner Parkstellung PS fixiert ist.

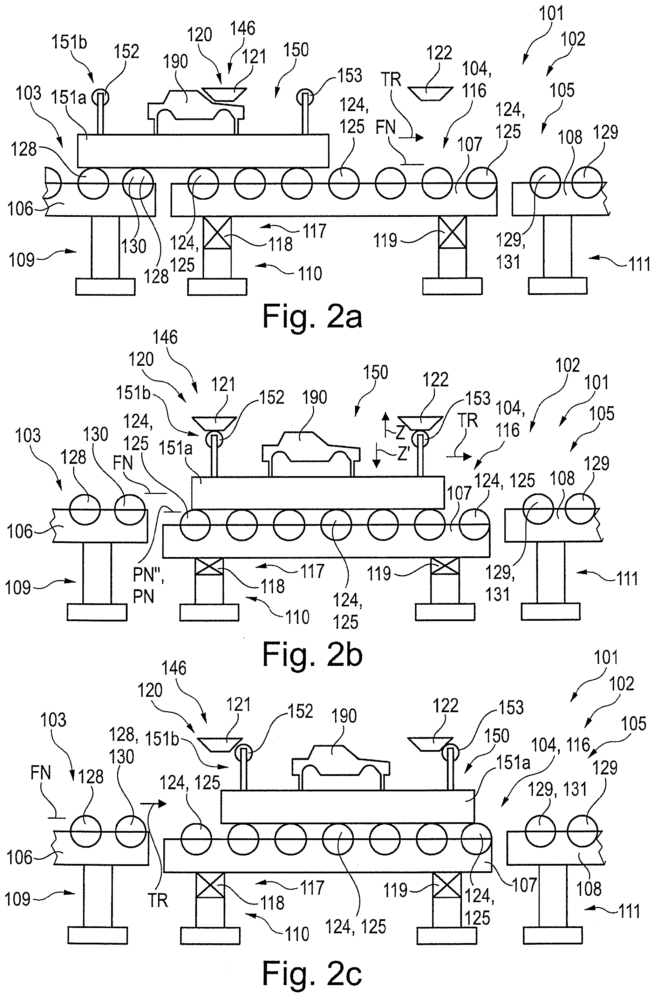

In den Figuren 2a bis 2c ist als Ausführungsvariante eine zweite erfindungsgemäße Fördereinrichtung 101 zum Transport eines Bauteils 190 in drei schematischen Seitenansichten gezeigt. Grundsätzlich wird hier auf die Beschreibung zu den Figuren 1a und 1d verwiesen, wobei die Figuren 1a und 2a sowie 1b bzw. 1c und 2b starke Analogien zueinander aufweisen. Die Figuren 2a bis 2c zeigen drei Gleisabschnitte 103, 104, 105 der Fördereinrichtung 101, von denen der mittlere als Geogleisabschnitt 116 ausgebildet ist. Analog zu der ersten Ausführungsvariante umfasst jeder der Gleisabschnitte 103, 104, 105 jeweils eine Schiene 106, 107, 108 sowie eine Stützeinrichtung 109, 110, 111. Der Geogleisabschnitt 116 umfasst zusätzlich noch eine Kompensationseinrichtung 117, welche zwei Kompensationsmittel 118, 119 umfasst. Die Schienen 106, 107, 108 umfassen jeweils Rollen 128, 124 und 129, welche nur exemplarisch bezeichnet sind. Hierbei sind jeweils einige der Rollen 127, 124, 129 als Antriebsrollen 130, 125 und 131 ausgebildet.

Auf einer durch die Gleisabschnitte 103, 104, 105 gebildeten Förderbahn 102 ist ein Bauteilträgerschlitten 150 in eine Transportrichtung TR geführt. Die Antriebsrollen 130, 125, 131 sind so verteilt, dass der Bauteilträgerschlitten 150 in jeder Stellung von wenigstens einer der Antriebsrollen 130, 125, 131 in die Transportrichtung TR bewegt werden kann. Der Bauteilträgerschlitten 150 wird in dem Geogleisabschnitt 116 im Unterschied zu dem in den Figuren 1a, 1b und 3 gezeigten Bauteilträgerschlitten nicht von einem Fahrniveau FN auf ein Parkniveau angehoben, sondern wird von einer Ablenkeinrichtung 120 des Geogleisabschnitts 116, welche Ablenkkeile 121, 122 umfasst, von dem Fahrniveau FN zusammen mit der Schiene 107 gegen eine nach oben gerichtete Kraft der Kompensationseinrichtung 117 nach unten in ein Parkniveau PN bewegt wird, wobei das Parkniveau PN entsprechend seiner Lage zu dem Fahrniveau FN als unters Parkniveau PN" benannt ist. Dieses Absenken des Bauteilträgerschlittens 150 und der Schiene 107 erfolgt dadurch, dass eine mit einem Grundkörper 151a des Bauteilträgerschlittens 150 bewegte Kontakteinrichtung 151b des Bauteilträgerschlittens 150, mit ihren Kontakterollen 152, 153 mit den ortsfesten Ablenkkeilen 121, 122 der Ablenkeinrichtung 120 des Geogleisabschnitts 116 in Kontakt kommt und sich die Kontaktrollen 152, 153 auf Anlaufflächen der Ablenkkeile 121, 122 abwälzen. Entsprechend wird ausgehend von einer Ablenkeinrichtung 120 und deren Ablenkkeilen 121, 122 eine nach unten in z'-Richtung gerichtete Kraft erzeugt, mit welcher der Bauteilträgerschlitten 150 die Schiene 107 des Geogleisabschnitts 116 gegen eine in z-Richtung nach oben gerichtete Kraft der Kompensationseinrichtung 117 in Richtung der Stützeinrichtung 110 des Geogleisabschnitts 116 drückt. Die Ablenkeinrichtung 120 des Geogleisabschnitts 116 ist zur Z-Positionierung des Bauteilträgerschlittens 150 als Absenkeinrichtung 146 ausgebildet.

In der Figur 2a ist gezeigt wie der Bauteilträgerschlitten 150 von der Förderbahn 102 von dem Gleisabschnitt 103 auf den Gleisabschnitt 104 bewegt wird. Hierbei liegen die Schiene 106 des Gleisabschnitts 103 und die Schiene 107 des Geogleisabschnitts 116 beide auf dem Fahrniveau FN.

In der Figur 2b ist dann gezeigt wie der Bauteilträgerschlitten 150 ausschließlich von der Schiene 107 des Geogleisabschnitts 116 getragen ist und bereits mit seinen Kontaktrollen 152, 153 unter die ortsfest angeordneten Ablenkkeile 121, 122 gefahren ist, so dass das untere Parkniveau PN" erreicht ist. In dem unteren Parkniveau PN" liegt die Schiene 107 des Geogleisabschnitts 116 tiefer als die benachbarten Schienen 106, 108 der Gleisabschnitte 103, 105. In dieser Parkstellung des Bauteilträgerschlittens 150 belastet die Ablenkeinrichtung 120 den Bauteilträgerschlitten 150 in Richtung der Gewichtskraft mit einer Zusatzkraft, so dass die Schiene 107, der Bauteilträgerschlitten 150 und das Bauteil 190 gegen eine nach oben gerichtete Kompensationskraft der Kompensationseinrichtung 117 abgesenkt sind und die Schiene 107 auf das unter dem Fahrniveau FN liegende untere Parkniveau PN" absenkt ist.

In der Figur 2c ist dann gezeigt, wie sich der Bauteilträgerschlitten 150 beim Weitertransport zusammen mit der Schiene 107 des Geogleisabschnitts 116 aus dem unteren Parkniveau PN" in Richtung des Fahrniveaus FN bewegt, wenn die Kontaktrollen 152, 153 auf Ablaufflächen der Ablenkkeile 121, 122 weiter abrollen. Zu einem Zeitpunkt, zu dem der Bauteilträgerschlitten 150 von der Schiene 107 auf die Schiene 108 bewegt wird, bewegt sich der Bauteilträgerschlitten 150 dann wieder auf dem Fahrniveau FN, da sich die Kontaktrolle 152, 153 des Bauteilträgerschlittens 150 dann wieder uneingeschränkt von den Ablenkkeilen 121, 122 bewegen.

Die Fördereinrichtung 101 ist ebenso wie die Fördereinrichtung 1 mit einer Anhalteeinrichtung ausgestattet. Entsprechend wird auf die Beschreibung zu den Figuren 1a bis 1d verwiesen. Weiterhin ist der Bauteilträgerschlitten 150 in gleicher Weise wie der Bauteilträgerschlitten 50 geführt. Entsprechend wird auf die Beschreibung zu der Figur 1d verwiesen, wobei lediglich die Ablenkeinrichtung 120 und die Kontakteinrichtung 151b abweichend ausgeführt sind, wie dies aus den Figuren 2a bis 2c ersichtlich ist. Weiterhin sind - wie oben bereits beschrieben - die Schiene 107, der Bauteilträgerschlitten 150 und das Bauteil 190 auf dem unteren Parkniveau PN" gehalten.

### Bezugszeichenliste:

- 1: erste Variante der Fördereinrichtung
- 2: Förderbahn
- 3, 4, 5: Gleisabschnitt
- 6, 7, 8: Schiene
- 9, 10, 11: Stützeinrichtung von 6, 7, 8
- 13, 14: Stützmittel von 10
- 16: Geogleisabschnitt
- 17: Kompensationseinrichtung
- 18: Kompensationsmittel von 17
- 18a: Hubzylinder als 18
- 19a: Hubzylinder als 19
- 19: Kompensationsmittel von 17
- 20: Ablenkeinrichtung von 16
- 21, 22: Ablenkkeile von 20
- 23: Anhebeeinrichtung
- 24: Rolle von 7
- 25: Antriebsrolle von 7
- 26: Transportabschnitt von 3
- 27: Transportabschnitt von 5
- 28: Rolle von 26
- 29: Rolle von 27
- 30: Antriebsrolle von 26
- 31: Antriebsrolle von 27
- 32: Seitenführungseinrichtung
- 33: rechte Seitenführungsmittel
- 35: rechte Seitenführungsrolle von 33

- 37: Kippsichereinrichtung
- 38: rechtes Druckführungsmittel
- 40: rechte Druckrolle von 38
- 42: Anhalteeinrichtung
- 43: verfahrbarer Anschlag von 42
- 44, 45: Z-Positioniermittel

- 50: Bauteilträgerschlitten
- 51a: Grundkörper von 50
- 51b: Kontakteinrichtung von 50
- 51c: Haltereinrichtung für 90
- 52: Kontaktrolle von 51b
- 52a: untere Gegenkontaktrolle zu 52
- 53: Kontaktrolle von 51b
- 53a: untere Gegenkontaktrolle zu 53
- 54: Bodenfläche von 50
- 55: T-Träger
- 56: Mittelsteg
- 57: Quersteg
- 57a: Oberseite von 57
- 57b: rechte Seitenfläche von 57
- 58: Hohlprofil (bildet 56)
- 90: Bauteil

- 101: zweite erfindungsgemäße Fördereinrichtung
- 102: Förderbahn
- 103, 104, 105: Gleisabschnitte
- 106, 107, 108: Schiene
- 109, 110, 111: Stützeinrichtung
- 116: Geogleisabschnitt
- 117: Kompensationseinrichtung
- 118, 119: Kompensationsmittel
- 120: Ablenkeinrichtung
- 121, 122: Ablenkkeile
- 124, 128, 129: Rollen
- 125, 130, 131: Antriebsrollen
- 146: Absenkeinrichtung

- 150: Bauteilträgerschlitten
- 151a: Grundkörper von 150
- 151b: Kontakteinrichtung von 150
- 152, 153: Kontakterolle von 151b

- 190: Bauteil

- FN: Fahrniveau
- GEE: Gewichtserfassungseinrichtung
- PEE: Positionserfassungseinrichtung
- PN: Parkniveau
- PN': oberes Parkniveau
- PN": unteres Parkniveau
- PS: Parkstellung von 50
- S1, S2: ersten, zweiter Sensor von GEE
- SE: Steuereinrichtung
- TR: Transportrichtung
- U: Untergrund
- XPN: x-Position von 50 in PS
- 50-I: erste Stellung von 50
- 50-II: zweite Stellung von 50
- x: x-Richtung
- x': x'-Richtung
- X1: x-Position
- y: y-Richtung
- y': y'-Richtung
- z: z-Richtung
- z': z'-Richtung

## Patentansprüche

1. Fördereinrichtung (1; 101) zum Transport und zum Positionieren von Bauteilen (90; 190),
- wobei die Fördereinrichtung (1; 101) eine Förderbahn (2; 102) umfasst,
- wobei die Förderbahn (2; 102) eine Vielzahl von Gleisabschnitten (3, 4, 5; 103, 104, 105) umfasst,
- wobei jeder Gleisabschnitt (3, 4, 5; 103, 104, 105) wenigstens eine Schiene (6, 7, 8; 106, 107, 108) und wenigstens eine Stützeinrichtung (9, 10, 11; 109, 110, 111) umfasst,
- wobei die Fördereinrichtung (1; 101) wenigstens einen Bauteilträgerschlitten (50; 150) umfasst,
- wobei der Bauteilträgerschlitten (50; 150) eine Kontakteinrichtung (51b; 151b) umfasst,
- wobei wenigstens einer der Gleisabschnitte (3, 4, 5; 103, 104, 105) als Geogleisabschnitt (16; 116) ausgebildet ist,
- wobei der Geogleisabschnitt (16; 116) eine Kompensationseinrichtung (17; 117) umfasst,
- wobei die Kompensationseinrichtung (17; 117) zwischen der Stützeinrichtung (10; 110) und der wenigstens einen Schiene (7; 107) des Geogleisabschnitts (16; 116) angeordnet ist,
**dadurch gekennzeichnet,**
- **dass** die Kompensationseinrichtung (17; 117) eine Gewichtskraft der Schiene (7; 107), eine Gewichtskraft eines der Bauteilträgerschlitten (50; 150) und eine Gewichtskraft des Bauteils (90; 190) kompensiert und die Schiene (7; 107) bei einer entsprechenden Belastung auf einem Fahrniveau (FN) hält,
- **dass** der Geogleisabschnitt (16; 116) eine Ablenkeinrichtung (20; 120) umfasst,
- **dass** die Ablenkeinrichtung (20; 120) in einer Parkstellung des Bauteilträgerschlittens (50; 150) derart mit der Kontakteinrichtung (51b; 151b) des Bauteilträgerschlittens (50; 150) zusammenwirkt, dass die Schiene (7; 107) des Geogleisabschnitts (16; 116), der Bauteilträgerschlitten (50; 150) und das Bauteil (90; 190) auf ein von dem Fahrniveau (FN) abweichendes Parkniveau (PN; PN'; PN") gelenkt sind und
- **dass** es insbesondere vorgesehen ist, dass die Ablenkeinrichtung (20; 120) des Geogleisabschnitts (16; 116) entweder als Anhebeeinrichtung (23) oder als Absenkeinrichtung (146) ausgebildet ist,
o wobei bei einer Ausbildung als Anhebeeinrichtung (23) das obere Parkniveau (PN') dadurch erreicht wird, dass die Ablenkeinrichtung (20) in der Parkstellung des Bauteilträgerschlittens (50) einen Teil der Gewichtskraft aufnimmt, so dass die Schiene (7), der Bauteilträgerschlitten (50) und das Bauteil (90) mit Unterstützung der Kompensationseinrichtung (17) angehoben sind und die Schiene (7) auf ein über dem Fahrniveau (FN) liegendes oberes Parkniveau (PN') angehoben ist,
o wobei bei einer Ausbildung als Absenkeinrichtung (146) das untere Parkniveau (PN") dadurch erreicht wird, dass die Ablenkeinrichtung (120) in der Parkstellung des Bauteilträgerschlittens (150) den Bauteilträgerschlitten (150) in Richtung der Gewichtskraft mit einer Zusatzkraft belastet, so dass die Schiene (107), der Bauteilträgerschlitten (150) und das Bauteil (190) gegen eine Kompensationskraft der Kompensationseinrichtung (117) abgesenkt sind und die Schiene (107) auf ein unter dem Fahrniveau (FM) liegendes unteres Parkniveau (PN") absenkt ist.

2. Fördereinrichtung nach Anspruch 1, **dadurch gekennzeichnet, dass** die Stützeinrichtung (3, 10, 11; 109, 110, 111) wenigstens zwei Stützmittel (12; 13, 14; 15) umfasst und dass die Kompensationseinrichtung (17; 117) wenigstens zwei Kompensationsmittel (18, 19) umfasst, wobei jedem der Stützmittel (12; 13, 14; 15) eines der Kompensationsmittel (18, 19) zugeordnet ist.

3. Fördereinrichtung nach wenigstens einem der vorhergehenden Ansprüche, **dadurch gekennzeichnet, dass** die wenigstens eine Schiene (7; 107) des Geogleisabschnitts (16; 116) Rollen (24; 124) oder wenigstens einen Riemen umfasst, auf welchen bzw. auf welchem der Bauteilträgerschlitten (50; 150) bewegt wird, wobei wenigstens eine der Rollen (24; 124) als motorisch angetriebene Antriebsrolle (25; 125) ausgebildet ist oder wobei der eine Riemen oder wenigstens einer der Riemen als motorisch angetriebener Riemen ausgebildet ist und wobei es insbesondere vorgesehen ist, dass der Bauteilträgerschlitten (50; 150) mit einer Bodenfläche (54) auf den Rollen (24, 25; 124, 125) des Geogleisabschnitts (16; 116) oder auf dem wenigstens einen Riemen des Geogleisabschnitts (16; 116) aufliegt.

4. Fördereinrichtung nach Anspruch 1, **dadurch gekennzeichnet, dass** die Ablenkkeile (21, 22; 121, 122) der Ablenkeinrichtung (20; 120) des Geogleisabschnitts (50; 150) Z-Positioniermittel (44, 45) bilden, welche mit einem Untergrund (U) und/oder mit der Stützeinrichtung (10; 110) verbunden sind.

5. Fördereinrichtung nach wenigstens einem der vorhergehenden Ansprüche, **dadurch gekennzeichnet,**
- **dass** jeder Gleisabschnitt (3, 4, 5; 103, 104, 105) eine Seitenführungseinrichtung (32) umfasst, wobei die Seitenführungseinrichtung (32) rechte Seitenführungsmittel (33) und linke Seitenführungsmittel umfasst, wobei die Seitenführungsmittel (33) mit der wenigstes einen Schiene (7) verbunden sind, wobei der Bauteilträgerschlitten (50; 150) zwischen den Seitenführungsmitteln (33) geführt ist und
- **dass** jeder Gleisabschnitt (3, 4, 5; 103, 104, 105) eine Kippsichereinrichtung (37) umfasst, wobei die Kippsichereinrichtung (37) in z'-Richtung wirkende rechte Druckführungsmittel (38) und linke Druckführungsmittel umfasst, wobei die Druckführungsmittel (38) mit der wenigstens einen Schiene (7; 107) verbunden sind, wobei der Bauteilträgerschlitten (50; 150) von den Druckführungsmitteln (38) gegen die wenigstens eine Schiene (7; 107) gedrückt ist und
- **dass** es insbesondere vorgesehen ist, dass der Bauteilträgerschlitten (50; 150) einen T-Träger (55) umfasst und mit dem T-Träger (55) auf den Rollen (24, 28, 29; 124, 128, 129) der wenigstens einen Schiene (6, 7, 8; 106, 107, 108) eines der Gleisabschnitte (3, 4, 5; 103, 104, 105) aufliegt, wobei die Druckführungsmittel (38) der Kippsichereinrichtung (37) rechts und links von einem Mittelsteg (56) des T-Trägers (55) auf einer Oberseite (57a) eines Querstegs (57) des T-Trägers (55) laufen und den T-Träger (55) gegen die Rollen (24, 28, 29; 124, 128, 129) der Schiene (6, 7, 8; 106, 107, 108) in z'-Richtung (z') auf die Schiene (6, 7, 8; 106, 107, 108) drücken und wobei die Seitenführungsmittel (33) der Seitenführungseinrichtung (32) rechts und links von dem Mittelsteg (56) des T-Trägers (55) an Seitenflächen (57b) des Querstegs (57) laufen und den T-Träger (55) in x-Richtung (x) auf Spur halten.

6. Fördereinrichtung nach Anspruch 1, **dadurch gekennzeichnet, dass** der Geogleisabschnitt (16; 116) wenigstens eine Anhalteeinrichtung (42) umfasst, wobei die Anhalteeinrichtung (42) mit der wenigstes einen Schiene (7; 107) verbunden ist, wobei die Anhalteeinrichtung (42) den Bauteilträgerschlitten (50; 150) in einer X-Position (XPS) stoppt, wenn dieser in Z-Richtung (z) das Parkniveau (PN'; PN") erreicht hat.

7. Fördereinrichtung nach Anspruch 4, **dadurch gekennzeichnet, dass** jedem Z-Positioniermittel (44, 45) ein Kompensationsmittel (18, 19) der Kompensationseinrichtung (17; 117) derart zugeordnet ist, dass das Kompensationsmittel (18, 19) zentrisch unter dem Z-Positioniermittel (44, 45) oder mit einen Abweichung in x-Richtung und/oder x'-Richtung und/oder y-Richtung und/oder y-Richtung von bis zu 50 cm und vorzugsweise nur bis zu 20 cm angeordnet ist.

8. Fördereinrichtung nach wenigstens einem der vorhergehenden Ansprüche, **dadurch gekennzeichnet, dass** wenigstens einer der Gleisabschnitte (3, 4, 5) der Förderbahn (2) und insbesondere der Geogleisabschnitt (16) eine Gewichtserfassungseinrichtung (GEE) umfasst, wobei die Gewichtserfassungseinrichtung (GEE) ein Gesamtgewicht von Bauteil (90) und Bauteilträgerschlitten (50) oder von Bauteil (90), Bauteilträgerschlitten (50) und Schiene (7) erfasst und/oder berechnet.

9. Fördereinrichtung nach wenigstens einem der vorhergehenden Ansprüche, **dadurch gekennzeichnet,**
- **dass** der Geogleisabschnitt (16) eine Steuereinrichtung (SE) umfasst, wobei die Steuereinrichtung (SE) eine Hubkraft der Kompensationseinrichtung (17) derart einstellt, dass die Schiene (7) des Geogleisabschnitts (16), der Bauteilträgerschlitten (50) und das Bauteil (90) derart angehoben sind, dass die Schiene (7) auf dem Fahrniveau (FN) liegt.

10. Fördereinrichtung nach wenigstens einem der vorhergehenden Ansprüche, **dadurch gekennzeichnet, dass** der Geogleisabschnitt (16) eine Positionserfassungseinrichtung (PEE) umfasst, wobei die Positionserfassungseinrichtung (PEE) eine x-Position (X1, XPN) des Bauteilträgerschlittens (50) auf dem Geogleisabschnitt (16) erfasst und wobei eine Steuereinheit (SE) eine Hubkraft der Kompensationseinrichtung (18) in Abhängigkeit von der x-Position (X1, XPN) des Bauteilträgerschlittens (50) auf dem Geogleisabschnitts (16) jeweils derart einstellt, dass ein Einfahren in die Ablenkeinrichtung (20) erleichtert ist und/oder dass ein Ausfahren aus der Ablenkeinrichtung (20) erleichtert ist und/oder dass der Bauteilträgerschlitten (50) durch eine von der Kompensationseinrichtung (18) aufgebrachte Hubkraft in der Parkstellung (PS) fixiert ist.

11. Verfahren zum Transport und zum Positionieren von Bauteilen (90, 190) mit einer Fördereinrichtung, nämlich einer Fördereinrichtung (50; 150) entsprechend wenigstens einem der Ansprüche 1 bis 10,
- wobei die Fördereinrichtung (1; 101) eine Förderbahn (2; 102) umfasst,
- wobei die Förderbahn (2; 102) eine Vielzahl von Gleisabschnitten (3, 4, 5; 103, 104, 105) und wenigstens einen Bauteilträgerschlitten (50; 150) umfasst,
- wobei jeder Gleisabschnitt (3, 4, 5; 103, 104, 105) wenigstens eine Schiene (6, 7, 8; 106, 107, 108) und eine Stützeinrichtung (9, 10, 11; 109, 110, 111) umfasst,
- wobei wenigstens einer der Gleisabschnitte (3, 4, 5; 103, 104, 105) als Geogleisabschnitt (16; 116) ausgebildet ist und zusätzlich eine Kompensationseinrichtung (17; 117) umfasst,
- wobei die Kompensationseinrichtung (17; 117) zwischen der Stützeinrichtung (10; 110) und der wenigstens einen Schiene (7; 107) des Geogleisabschnitts (16; 116) angeordnet ist,
- wobei in dem Geogleisabschnitt (16; 116) die Gewichtskraft der wenigstens einen Schiene (7; 107), die Gewichtskraft des Bauteilträgerschlittens (50, 150) und die Gewichtskraft des Bauteils (90; 190) durch die Kompensationseinrichtung (17; 117) kompensiert werden, wenn der Bauteilträgerschlitten (50; 150) auf einem Fahrniveau (FN) bewegt wird und
- wobei der Bauteilträgerschlitten (50; 150) in dem Geogleisabschnitt (16; 116) von dem Fahrniveau (FN) dadurch auf ein Parkniveau (PN) gelenkt wird, dass von einer Ablenkeinrichtung (20; 120) des Geogleisabschnitts (16; 116) derart mit einer Ablenkkraft auf eine Kontakteinrichtung (51b; 151b) des Bauteilträgerschlittens (50; 150) eingewirkt wird, dass der Bauteilträgerschlitten (50; 150) von dem Fahrniveau (FN) weg auf das Parkniveau (PN) bewegt wird, wobei zusammen mit dem Bauteilträgerschlitten (50; 150) auch die wenigstens eine Schiene (7; 107) und das Bauteil (90; 190) bewegt werden.

12. Verfahren nach Anspruch 11, **dadurch gekennzeichnet,**
- **dass** die Ablenkkraft in Richtung der Gewichtskraft gerichtet ist und der Bauteilträgerschlitten (150) von der Ablenkkraft gegen die Kompensationskraft der Kompensationseinrichtung (117) auf ein unter dem Fahrniveau (FN) liegendes unteres Parkniveau (PN") gedrückt wird oder
- **dass** die Ablenkkraft der Gewichtskraft entgegen gerichtet ist und der Bauteilträgerschlitten (50) von der Ablenkkraft mit Unterstützung durch die Kompensationskraft der Kompensationseinrichtung (17) auf ein über dem Fahrniveau (FN) liegendes oberes Parkniveau (PN') gehoben wird.

13. Verfahren nach Anspruch 12, **dadurch gekennzeichnet,**
- **dass** zum Erreichen der unteren Parkniveaus (PN") die wenigstens eine Schiene (107) des Geogleisabschnitts (116) an die Stützeinrichtung (110) angenähert wird oder
- **dass** zum Erreichen des oberen Parkniveaus (PN') die wenigstens eine Schiene (7) des Geogleisabschnitts (16) von der Stützeinrichtung (10) weg bewegt wird.

14. Verfahren nach Anspruch 11 oder 12 oder 13, **dadurch gekennzeichnet,**
- **dass** eine maximale Hubkraft der Kompensationseinrichtung (17; 117) derart eingestellt wird, dass von der Kompensationseinrichtung (17; 117) eine Hubkraft erzeugt wird, welche wenigstens gleich der Summe der Gewichtskraft des Werkstücks (90; 190) und der Gewichtskraft des Bauteilträgerschlittens (50; 150) und der Gewichtskraft der Schiene (7; 170) ist Und
- **dass** es insbesondere vorgesehen ist, dass mittels einer Gewichtserfassungseinrichtung eine Masse des Werkstücks (90, 190) und eine Masse des Bauteilträgerschlittens (50; 150) und eine Masse der wenigstens einen Schiene (7; 107) erfasst und/oder berechnet wird, wobei eine ermittelte Gesamtmasse an eine Steuereinrichtung weitergeleitet wird, wobei von der Steuereinheit eine wenigstens die Gesamtmasse kompensierende Hubkraft der Kompensationseinrichtung (17; 117) eingestellt wird.

## Claims

1. Conveyor device (1; 101) for transporting and positioning components (90; 190),
- wherein the conveyor device (1; 101) comprises a conveyor track (2; 102),
- wherein the conveyor track (2; 102) comprises a multiplicity of track sections (3, 4, 5; 103, 104, 105),
- wherein each track section (3, 4, 5; 103, 104, 105) comprises at least one rail (6, 7, 8; 106, 107, 108) and at least one support device (9, 10, 11; 109, 110, 111),
- wherein the conveyor device (1; 101) comprises at least one component carrier carriage (50; 150),
- wherein the component carrier carriage (50; 150) comprises a contact device (51b; 151b),
- wherein at least one of the track sections (3, 4, 5; 103, 104, 105) is designed as a geotrack section (16; 116),
- wherein the geotrack section (16; 116) comprises a compensation device (17; 117),
- wherein the compensation device (17; 117) is disposed between the support device (10; 110) and at least one rail (7; 107) of the geotrack section (16; 116),
**characterized in that**
- the compensation device (17; 117) compensates for a weight force of the rail (7; 107), a weight force of one of the component carrier carriages (50; 150) and a weight force of the component (90; 190) and keeps the rail (7; 107) at a travelling level (FN) under a corresponding load,
- the geotrack section (16; 116) comprises a deflection device (20; 120),
- the deflection device (20; 120) in a parking position of the component carrier carriage (50; 150) interacts with the contact device (51b; 151b) of the component carrier carriage (50; 150) in such a manner that the rail (7; 107) of the geotrack section (16; 116), the component carrier carriage (50; 150) and the component (90; 190) are directed to a parking level (PN; PN'; PN") different from the travelling level (FN), and
- it is provided in particular that the deflection device (20; 120) of the geotrack section (16; 116) is designed either as a lifting device (23) or as a lowering device (146),
O wherein, in a design as a lifting device (23), the upper parking level (PN') is reached **in that** the deflection device (20), in the parking position of the component carrier carriage (50), receives part of the weight force so that the rail (7), the component carrier carriage (50) and the component (90) are lifted with the support of the compensation device (17) and the rail (7) is lifted to an upper parking level (PN') above the travelling level (FN),
O wherein, in a design as a lowering device (146), the lower parking level (PN") is reached **in that** the deflection device (120), in the parking position of the component carrier carriage (150), impinges the component carrier carriage (150) with an additional force in the direction of the weight force, so that the rail (107), the component carrier carriage (150) and the component (190) are lowered counter to a compensating force of the compensation device (117), and the rail (107) is lowered to a lower parking level (PN") below the travelling level (FM) .

2. Conveyor device according to Claim 1, **characterized in that** the support device (3, 10, 11; 109, 110, 111) comprises at least two support means (12; 13, 14; 15), and **in that** the compensation device (17; 117) comprises at least two compensation means (18, 19), wherein each of the support means (12; 13, 14; 15) is assigned one of the compensation means (18, 19).

3. Conveyor device according to at least one of the preceding claims, **characterized in that** the at least one rail (7; 107) of the geotrack section (16; 116) comprises rollers (24; 124), or at least one belt, on which the component carrier carriage (50; 150) is moved, wherein at least one of the rollers (24; 124) is designed as a motor-driven drive roller (25; 125), or wherein the one belt, or at least one of the belts, is designed as a motor-driven belt, and wherein it is provided in particular that the component carrier carriage (50; 150) by way of a bottom surface (54) rests on the rollers (24, 25; 124, 125) of the geotrack section (16; 116) or on the at least one belt of the geotrack section (16; 116).

4. Conveyor device according to Claim 1, **characterized in that** the deflection wedges (21, 22; 121, 122) of the deflection device (20; 120) of the geotrack section (50; 150) form Z-positioning means (44, 45) which are connected to a substrate (U) and/or to the support device (10; 110).

5. Conveyor device according to at least one of the preceding claims, **characterized in that**
- each track section (3, 4, 5; 103, 104, 105) comprises a lateral guiding device (32), wherein the lateral guiding device (32) comprises right lateral guiding means (33) and left lateral guiding means, wherein the lateral guiding means (33) are connected to the at least one rail (7), wherein the component carrier carriage (50; 150) is guided between the lateral guiding means (33), and
- each track section (3, 4, 5; 103, 104, 105) comprises an anti-tilt device (37), wherein the anti-tilt device (37) comprises right pressure guiding means (38) acting in the z' direction and left pressure guiding means acting in the z' direction, wherein the pressure guiding means (38) are connected to the at least one rail (7; 107), wherein the component carrier carriage (50; 150) is pressed against the at least one rail (7; 107) by the pressure guiding means (38), and
- it is provided in particular that the component carrier carriage (50; 150) comprises a T-beam (55) and by way of the T-beam (55) rests on the rollers (24, 28, 29; 124, 128, 129) of the at least one rail (6, 7, 8; 106, 107, 108) of one of the track sections (3, 4, 5; 103, 104, 105), wherein the pressure guiding means (38) of the anti-tilt device (37) run on the right and on the left of a central web (56) of the T-beam (55) on an upper side (57a) of a transverse web (57) of the T-beam (55), and press the T-beam (55) against the rollers (24, 28, 29; 124, 128, 129) of the rail (6, 7, 8; 106, 107, 108) in the z' direction (z') onto the rail (6, 7, 8; 106, 107, 108), and wherein the lateral guiding means (33) of the lateral guiding device (32) run on the right and on the left of the central web (56) of the T-beam (55) on lateral surfaces (57b) of the transverse web (57) and keep the T-beam (55) on track in the x direction (x).

6. Conveyor device according to Claim 1, **characterized in that** the geotrack section (16; 116) comprises at least one stopping device (42), wherein the stopping device (42) is connected to the at least one rail (7; 107), wherein the stopping device (42) stops the component carrier carriage (50; 150) in an X-position (XPS) when the latter reaches the parking level (PN'; PN") in the Z-direction (z).

7. Conveyor device according to Claim 4, **characterized in that** each Z-positioning means (44, 45) is assigned one compensation means (18, 19) of the compensation device (17; 117) in such a manner that the compensation means (18, 19) is disposed centrally under the Z positioning means (44, 45), or with a deviation in the x-direction and/or x'-direction and/or y-direction and/or y-direction of up to 50 cm and preferably only up to 20 cm.

8. Conveyor device according to at least one of the preceding claims, **characterized in that** at least one of the track sections (3, 4, 5) of the conveyor track (2), and in particular the geotrack section (16), comprises a weight sensing device (GEE), wherein the weight sensing device (GEE) detects and/or computes a total weight of the component (90) and the component carrier carriage (50), or of the component (90), the component carrier carriage (50) and the rail (7).

9. Conveyor device according to at least one of the preceding claims, **characterized in that**
- the geotrack section (16) comprises a control device (SE), wherein the control device (SE) sets a lifting force of the compensation device (17) in such a manner that the rail (7) of the geotrack section (16), the component carrier carriage (50) and the component (90) are lifted in such a manner that the rail (7) lies at the travelling level (FN).

10. Conveyor device according to at least one of the preceding claims, **characterized in that** the geotrack section (16) comprises a position detection device (PEE), wherein the position detection device (PEE) detects an x-position (X1, XPN) of the component carrier carriage (50) on the geotrack section (16), and wherein a control unit (SE) sets in each case a lifting force of the compensation device (18) as a function the x-position (X1, XPN) of the component carrier carriage (50) on the geotrack section (16) in such a manner that entering the deflection device (20) is facilitated, and/or that exiting the deflection device (20) is facilitated, and/or that the component carrier carriage (50) is fixed in the parking position (PS) by a lifting force applied by the compensation device (18).

11. Method for transporting and positioning components (90, 190) with a conveyor device, specifically a conveyor device (50; 150) according to at least one of Claims 1 to 10,
- wherein the conveyor device (1; 101) comprises a conveyor track (2; 102),
- wherein the conveyor track (2; 102) comprises a multiplicity of track sections (3, 4, 5; 103, 104, 105) and at least one component carrier carriage (50; 150),
- wherein each track section (3, 4, 5; 103, 104, 105) comprises at least one rail (6, 7, 8; 106, 107, 108) and a support device (9, 10, 11; 109, 110, 111),
- wherein at least one of the track sections (3, 4, 5; 103, 104, 105) is designed as a geotrack section (16; 116) and additionally comprises a compensation device (17; 117),
- wherein the compensation device (17; 117) is disposed between the support device (10; 110) and at least one rail (7; 107) of the geotrack section (16; 116),
- wherein in the geotrack section (16; 116) the weight force of the at least one rail (7; 107), the weight force of the component carrier carriage (50, 150) and the weight force of the component (90; 190) are compensated for by the compensation device (17; 117) when the component carrier carriage (50; 150) is moved at a travelling level (FN), and
- wherein the component carrier carriage (50; 150) in the geotrack section (16; 116) is directed from the travelling level (FN) to a parking level (PN) in that a deflection force is applied to a contact device (51b; 151b) of the component carrier carriage (50; 150) by a deflection device (20; 120) of the geotrack section (16; 116) in such a manner that the component carrier carriage (50; 150) is moved away from the travelling level (FN) to the parking level (PN), whereby the at least one rail (7; 107) and the component (90; 190) are also moved conjointly with the component carrier carriage (50; 150).

12. Method according to Claim 11, **characterized in that**
- the deflection force is directed in the direction of the weight force, and the component carrier carriage (150) is pushed to a lower parking level (PN") below the travelling level (FN) by the deflection force acting counter to the compensating force of the compensation device (117), or
- the deflection force is directed counter to the weight force, and the component carrier carriage (50) is lifted to an upper parking level (PN') above the travelling level (FN) by the deflection force supported by the compensating force of the compensation device (17).

13. Method according to Claim 12, **characterized in that**
- for reaching the lower parking levels (PN"), the at least one rail (107) of the geotrack section (116) is moved closer to the support device (110), or
- for reaching the upper parking level (PN'), the at least one rail (7) of the geotrack section (16) is moved away from the support device (10).

14. Method according to Claim 11 or 12 or 13, **characterized in that**
- a maximum lifting force of the compensation device (17; 117) is set in such a manner that a lifting force is generated by the compensation device (17; 117), which is at least equal to the sum of the weight force of the workpiece (90; 190) and the weight force of the component carrier carriage (50; 150) and the weight force of the rail (7; 170), and
- it is provided in particular that a mass of the workpiece (90, 190) and a mass of the component carrier carriage (50; 150) and a mass of the at least one rail (7; 107) are detected and/or computed by means of a weight sensing device, wherein a determined total mass is transmitted to a control device, wherein a lifting force of the compensation device (17; 117) compensating at least for the total mass is set by the control unit.

## Revendications

1. Dispositif convoyeur (1 ; 101) pour le transport et le positionnement de composants (90 ; 190),
- le dispositif convoyeur (1 ; 101) comprenant une voie de convoyeur (2 ; 102),
- la voie de convoyeur (2 ; 102) comprenant une pluralité de sections de voie (3, 4, 5 ; 103, 104, 105),
- chaque section de voie (3, 4, 5 ; 103, 104, 105) comprenant au moins un rail (6, 7, 8 ; 106, 107, 108) et au moins un dispositif support (9, 10, 11 ; 109, 110, 111),
- le dispositif convoyeur (1 ; 101) comprenant au moins un coulisseau (50 ; 150) porte-composant,
- le coulisseau (50 ; 150) porte-composant comprenant un dispositif de contact (51b ; 151b),
- au moins une des sections de voie (3, 4, 5 ; 103, 104, 105) étant conçue sous la forme d'une section (16 ; 116) formant géorail,
- la section (16 ; 116) formant géorail comprenant un dispositif de compensation (17 ; 117),
- le dispositif de compensation (17 ; 117) étant agencé entre le dispositif support (10 ; 110) et ledit au moins un rail (7 ; 107) de la section (16 ; 116) formant géorail,
**caractérisé**
- **en ce que** le dispositif de compensation (17 ; 117) compense une force de poids du rail (7 ; 107), une force de poids de l'un des coulisseaux (50 ; 150) porte-composant et une force de poids du composant (90 ; 190) et maintient le rail (7 ; 107) à un niveau de déplacement (FN) lors d'une charge correspondante,
- **en ce que** la section (16 ; 116) formant géorail comprend un dispositif de déviation (20 ; 120),
- **en ce que** le dispositif de déviation (20 ; 120) coopère, dans une position de stationnement du coulisseau (50 ; 150) porte-composant, avec le dispositif de contact (51b ; 151b) du coulisseau (50 ; 150) porte-composant de telle sorte que le rail (7 ; 107) de la section (16 ; 116) formant géorail, le coulisseau (50 ; 150) porte-composant et le composant (90 ; 190) soient dirigés vers un niveau de stationnement (PN ; PN' ; PN") différent du niveau de déplacement (FN) et
- **en ce qu'**il est notamment prévu que le dispositif de déviation (20 ; 120) de la section (16 ; 116) formant géorail est conçu soit sous la forme d'un dispositif de levage (23) soit sous la forme d'un dispositif d'abaissement (146),
o dans le cas d'une réalisation en tant que dispositif de levage (23), le niveau de stationnement supérieur (PN') est atteint par le fait que le dispositif de déviation (20) absorbe une partie du poids dans la position de stationnement du coulisseau (50) porte-composant, de sorte que le rail (7), le coulisseau (50) porte-composant et le composant (90) soient soulevés avec l'aide du dispositif de compensation (17), et en ce que le rail (7) soit soulevé à un niveau de stationnement supérieur (PN') situé au-dessus du niveau de déplacement (FN),
o dans le cas d'une réalisation en tant que dispositif d'abaissement (146), le niveau de stationnement inférieur (PN") étant atteint, par le fait que le dispositif de déviation (120), dans la position de stationnement du coulisseau (150) porte-composant, charge le coulisseau (150) porte-composant en direction du poids avec une force supplémentaire, de sorte que le rail (107), le coulisseau (150) porte-composant et le composant (190) soient abaissés à l'encontre d'une force de compensation du dispositif de compensation (117) et que le rail (107) soit abaissé à un niveau de stationnement inférieur (PN") situé en dessous du niveau de déplacement (FM).

2. Dispositif convoyeur selon la revendication 1, **caractérisé en ce que** le dispositif support (3, 10, 11 ; 109, 110, 111) comprend au moins deux moyens de support (12 ; 13, 14 ; 15) et **en ce que** le dispositif de compensation (17 ; 117) comprend au moins deux moyens de compensation (18, 19), chacun des moyens de support (12 ; 13, 14 ; 15) étant associé à l'un des moyens de compensation (18, 19).

3. Dispositif convoyeur selon au moins une des revendications précédentes, **caractérisé en ce que** ledit au moins un rail (7 ; 107) de la section (16 ; 116) formant géorail comprend des rouleaux (24 ; 124) ou au moins une courroie sur lesquels ou laquelle le coulisseau (50 ; 150) porte-composant est déplacé, au moins un des rouleaux (24 ; 124) étant conçu sous la forme d'un rouleau d'entraînement (25 ; 125) entraîné par un moteur, ou une des courroies ou au moins une des courroies étant conçue sous la forme d'une courroie entraînée par un moteur, et il est notamment prévu que le coulisseau (50 ; 150) porte-composant repose par une surface inférieure (54) sur les rouleaux (24, 25 ; 124, 125) de la section (16 ; 116) formant géorail ou sur l'une au moins des courroies de la section (16 ; 116) formant géorail.

4. Dispositif convoyeur selon la revendication 1, **caractérisé en ce que** les cales de déviation (21, 22 ; 121, 122) du dispositif de déviation (20 ; 120) de la section formant géorail (50 ; 150) forment des moyens de positionnement en Z (44, 45) reliés à un sol (U) et/ou au dispositif support (10 ; 110).

5. Dispositif convoyeur selon au moins une des revendications précédentes, **caractérisé**
- **en ce que** chaque section de voie (3, 4, 5 ; 103, 104, 105) comprend un dispositif (32) de guidage latéral, le dispositif (32) de guidage latéral comprenant des moyens (33) de guidage latéral droit et des moyens de guidage latéral gauche, les moyens (33) de guidage latéral étant reliés audit au moins un rail (7), le coulisseau (50 ; 150) porte-composant étant guidé entre les moyens (33) de guidage latéral, et
- **en ce que** chaque section de voie (3, 4, 5 ; 103, 104, 105) comprend un dispositif anti-basculement (37), le dispositif anti-basculement (37) comprenant des moyens de guidage par pression de droite (38) agissant dans la direction z' et des moyens de guidage par pression de gauche, les moyens (38) de guidage par pression étant reliés audit au moins un rail (7 ; 107), le coulisseau (50 ; 150) porte-composant étant pressé par les moyens (38) de guidage par pression contre ledit au moins un rail (7 ; 107) et
- **en ce qu'**il est notamment prévu que le coulisseau (50 ; 150) porte-composant comprend un support en T (55) et repose avec le support en T (55) sur les rouleaux (24, 28, 29 ; 124, 128, 129) dudit au moins un rail (6, 7, 8 ; 106, 107, 108) de l'une des sections de voie (3, 4, 5 ; 103, 104, 105), les moyens (38) de guidage par pression du dispositif anti-basculement (37) se déplaçant à droite et à gauche d'une âme centrale (56) de la poutre en T (55) sur une face supérieure (57a) d'une âme transversale (57) de la poutre en T (55) et appliquant la poutre en T (55) contre les rouleaux (24, 28, 29 ; 124, 128, 129) du rail (6, 7, 8 ; 106, 107, 108) dans la direction z' (z') sur le rail (6, 7, 8 ; 106, 107, 108) et dans lequel les moyens (33) de guidage latéral du dispositif (32) de guidage latéral se déplacent à droite et à gauche de l'âme centrale (56) du support en T (55) sur des faces latérales (57b) de l'âme transversale (57) et maintiennent le support en T (55) sur une voie dans la direction x (x).

6. Dispositif convoyeur selon la revendication 1, **caractérisé en ce que** la section (16 ; 116) formant géorail comprend au moins un dispositif d'arrêt (42), le dispositif d'arrêt (42) étant relié audit au moins un rail (7 ; 107), le dispositif d'arrêt (42) arrêtant le coulisseau (50 ; 150) porte-composant dans une position X (XPS) lorsque celui-ci a atteint le niveau de stationnement (PN' ; PN") dans la direction Z (z).

7. Dispositif convoyeur selon la revendication 4, **caractérisé en ce qu'**à chaque moyen de positionnement en Z (44, 45) est associé un moyen de compensation (18, 19) du dispositif de compensation (17 ; 117) de telle sorte que le moyen de compensation (18, 19) soit agencé de manière centrée sous le moyen de positionnement en Z (44, 45) ou avec un écart dans la direction x et/ou la direction x' et/ou la direction y et/ou la direction y allant jusqu'à 50cm et de préférence jusqu'à 20cm seulement.

8. Dispositif convoyeur selon au moins une des revendications précédentes, **caractérisé en ce qu'**au moins une des sections de voie (3, 4, 5) de la voie de convoyeur (2) et en particulier la section de voie de géorail (16) comprend un dispositif (GEE) de détection de poids, le dispositif (GEE) de détection de poids détectant et/ou calculant un poids total du composant (90) et du coulisseau (50) porte-composant ou du composant (90), du coulisseau (50) porte-composant et du rail (7).

9. Dispositif convoyeur selon au moins une des revendications précédentes, **caractérisé**
- **en ce que** la section (16) formant géorail comprend un dispositif de commande (SE), le dispositif de commande (SE) réglant une force de levage du dispositif de compensation (17) de telle sorte que le rail (7) de la section (16) formant géorail, le coulisseau de support d'éléments de construction (50) et l'élément de construction (90) soient soulevés de façon que le rail (7) se trouve au niveau de déplacement (FN).

10. Dispositif convoyeur selon au moins une des revendications précédentes, **caractérisé en ce que** la section formant géorail (16) comprend un dispositif (PEE) de détection de position, le dispositif (PEE) de détection de position détectant une position x (X1, XPN) du coulisseau (50) porte-composant sur la section formant géorail (16) et une unité de commande (SE) déterminant une force de levage du dispositif de compensation (18) en fonction de la position x (X1, XPN) du coulisseau (50) porte-composant sur la section (16) formant géorail de telle sorte qu'une entrée dans le dispositif de déviation (20) soit facilitée et/ou qu'une sortie du dispositif de déviation (20) soit facilitée et/ou que le coulisseau (50) porte-composant soit fixé dans la position de stationnement (PS) par une force de levage appliquée par le dispositif de compensation (18).

11. Procédé de convoyage et de positionnement de composants (90, 190) au moyen d'un dispositif convoyeur, à savoir un dispositif convoyeur (50 ; 150) correspondant à au moins une des revendications 1 à 10,
- le dispositif convoyeur (1 ; 101) comprenant une voie de convoyeur (2 ; 102),
- la voie de convoyeur (2 ; 102) comprenant une pluralité de sections de voie (3, 4, 5 ; 103, 104, 105) et au moins un coulisseau (50 ; 150) porte-composant,
- chaque section de voie (3, 4, 5 ; 103, 104, 105) comprenant au moins un rail (6, 7, 8 ; 106, 107, 108) et un dispositif support (9, 10, 11 ; 109, 110, 111),
- au moins une des sections de voie (3, 4, 5 ; 103, 104, 105) étant conçue sous la forme d'une section (16 ; 116) formant géorail et comprenant en outre un dispositif de compensation (17 ; 117),
- le dispositif de compensation (17 ; 117) étant agencé entre le dispositif support (10 ; 110) et ledit au moins un rail (7 ; 107) de la section (16 ; 116) formant géorail,
- dans lequel, dans la section (16 ; 116) formant géorail, la force de poids dudit au moins un rail (7 ; 107), la force de poids du coulisseau (50 ; 150) porte-composant et la force de poids du composant (90 ; 190) sont compensées par le dispositif de compensation (17 ; 117) lorsque le coulisseau (50 ; 150) porte-composant est déplacé à un niveau de déplacement (FN), et
- le coulisseau (50 ; 150) porte-composant étant dirigé dans la section (16 ; 116) formant géorail du niveau de déplacement (FN) à un niveau de stationnement (PN) par le fait qu'un dispositif de déviation (20 ; 120) de la section (16 ; 116) formant géorail agit avec une force de déviation sur un dispositif de contact (51b ; 151b) du coulisseau (50 ; 150) porte-composant, de sorte que le coulisseau (50 ; 150) porte-composant est déplacé du niveau de déplacement (FN) au niveau de stationnement (PN), ledit au moins un rail (7 ; 107) et le composant (90 ; 190) étant également déplacés conjointement avec le coulisseau (50 ; 150) porte-composant.

12. Procédé selon la revendication 11, **caractérisé**
- **en ce que** la force de déviation est dirigée dans la direction de la force de poids et le coulisseau (150) porte-composant est poussé par la force de déviation contre la force de compensation du dispositif de compensation (117) à un niveau de stationnement inférieur (PN") situé en dessous du niveau de déplacement (FN), ou
- **en ce que** la force de déviation est dirigée en sens inverse du poids et le coulisseau (50) porte-composant est soulevé par la force de déviation, avec l'aide de la force de compensation du dispositif de compensation (17), jusqu'à un niveau de stationnement supérieur (PN') situé au-dessus du niveau de déplacement (FN).

13. Procédé selon la revendication 12, **caractérisé**
- **en ce que**, pour atteindre les niveaux de stationnement inférieurs (PN"), ledit au moins un rail (107) de la section formant géorail (116) est rapproché du dispositif support (110), ou
- **en ce que**, pour atteindre le niveau de stationnement supérieur (PN'), ledit au moins un rail (7) de la section formant géorail (16) est éloigné du dispositif support (10).

14. Procédé selon la revendication 11 ou 12 ou 13, **caractérisé**
- **en ce qu'**une force de levage maximale du dispositif de compensation (17 ; 117) est réglée de telle sorte que le dispositif de compensation (17 ; 117) génère une force de levage qui est au moins égale à la somme du poids du composant (90 ; 190) et du poids du coulisseau (50 ; 150) porte-composant et du poids du rail (7 ; 170), et
- **en ce qu'**il est prévu en particulier qu'au moyen **d'un** dispositif de détection de poids, une masse du composant (90 ; 190) et une masse du coulisseau (50 ; 150) porte-composant et une masse dudit au moins un rail (7 ; 107) sont détectées et/ou calculées, une masse totale déterminée étant transmise à un dispositif de commande, une force de levage du dispositif de compensation (17 ; 117), compensant au moins la masse totale, étant réglée par l'unité de commande.
